# EUROPÄISCHE PATENTSCHRIFT

(11) **EP 1 226 894 B1**
(45) Veröffentlichungstag und Bekanntmachung des Hinweises auf die Patenterteilung: **06.07.2011**
(21) Anmeldenummer: 02006426.7
(22) Anmeldetag: 21.01.1999
(51) Int. Cl.: B23B 29/04

(54) **Vorrichtung zum Verbinden eines Werkzeugkopfs mit einem Spannschaft**
Device for connecting a tool head to a clamping shaft
Dispositif de connection d' une tête d' outil à une broche de serrage

(30) Priorität: 23.01.1998 DE 19802334; 14.05.1998 DE 19821484; 13.11.1998 DE 19852397; 24.12.1998 DE 19860184
(43) Veröffentlichungstag der Anmeldung: 31.07.2002
(62) Teilanmeldung aus: 99906180.7
(73) Patentinhaber: Komet Group GmbH, 74354 Besigheim (DE)
(72) Erfinder: Stolz, Gerhard, 74379 Ingersheim (DE)
(74) Vertreter: Wolf, Eckhard

(56) Entgegenhaltungen:
- WO-A-95/16533
- DE-A- 4 220 873
- DE-U- 9 212 205

## Beschreibung

Die Erfindung betrifft eine Vorrichtung zum Verbinden eines einen Hohlschaft aufweisenden Werkzeugkopfs mit einem eine Aufnahme für den Hohlschaft aufweisenden, vorzugsweise stirnseitig an einer Maschinenspindel angeordneten Spannschaft, mit mindestens zwei einen Winkelabstand voneinander aufweisenden, mit ihrem einen Ende in die Aufnahme des Spannschafts einsetzbaren und sich mit ihrem anderen Ende in das Innere des einzuspannenden Hohlschafts erstreckenden klauen- oder klammerartigen Spannelementen, die mit je zwei in axialem Abstand voneinander angeordneten, einander zugewandten Spannschultem an im Inneren des Spannschafts und des Hohlschafts angeordneten, voneinander abgewandten Spannflächen abstützbar sind, und mit einem Betätigungsmechanismus zur Verstellung der Spannelemente zwischen einer Lösestellung und einer Spannstellung, wobei zwei einander radial gegenüberliegende Spannelemente oder Spannelementpaare als getrennte Teile ausgebildet sind, die gegebenenfalls mittelbar über ein Zwischenglied gegeneinander anliegen und über den Betätigungsmechanismus gegeneinander verschwenkbar sind. Eine solche Verbindungsvorrichtung ist beispielsweise bekannt aus der WO 95/16533.

Die mit dem Betätigungsmechanismus verstellbaren Spannelemente dienen zur Erzeugung einer Anpresskraft zwischen Planflächen der miteinander zu kuppelnden Teile. Bei einer bekannten Vorrichtung dieser Art (siehe auch DE-U-9212205) sind die klauen- oder klammerartigen Spannelemente mit ihrem einen Ende in die Aufnahme des Spannschafts eingesetzt, während sie sich mit ihrem anderen Ende in das Innere des hohl ausgebildeten Werkzeugschafts erstrecken. Sie sind mit je zwei in axialem Abstand voneinander angeordneten, einander zugewandten Spannschultem an im Inneren des Spannschafts und des hohlen Werkzeugschafts angeordneten, voneinander abgewandten Spannflächen abstützbar und mit dem Betätigungsmechanismus zwischen einer Lösestellung und einer Spannstellung verstellbar. Ein Nachteil der bekannten Vorrichtung besteht häufig darin, dass beim Spannvorgang relativ große Reibungs- und Federkräfte zu überwinden sind, die der Erzielung einer hohen Einspannkraft zwischen den zu kuppelnden Teilen entgegenwirken. Ein weiterer Nachteil der bekannten Kupplungsvorrichtung dieser Art besteht in dem relativ komplizierten, oft aus filigranen Einzelteilen bestehenden mechanischen Aufbau des Spannmechanismus, der vor allem bei kleinen Baugrößen zu Festigkeits- und Montageproblemen führt.

Ausgehend hiervon liegt der Erfindung zugrunde, eine Verbindungsvorrichtung der eingangs angegebenen Art zu entwickeln, die einfach herstellbar und montierbar ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Zur Lösung dieser Aufgabe wird gemäß der Erfindung primär vorgeschlagen, dass die Spannelemente oder Spannelementpaare unter Bildung eines Spanneinsatzes an ihrem spannschaftseitigen Ende unmittelbar oder mittelbar über das Zwischenglied gegeneinander anliegen und um eine durch die Anlagestelle gebildete Kippachse gegeneinander verschwenkbar sind. Dabei ist es von Vorteil, wenn die Spannelementpaare an ihren spannschaftseitigen Enden paarweise über ein quer zur Kippachse ausgerichtetes Biegegelenk einstückig miteinander verbundene und um dessen Biegeachse mit Hilfe des Betätigungsmechanismus gegeneinander verbiegbare Spannelemente aufweisen. Vorteilhafterweise sind die spannschaftseitigen Enden der Spannelemente oder Spannelementpaare im Bereich der Anlagestelle ballig ausgebildet. Das Zwischenglied ist vorteilhafterweise als lose zwischen die spannschaftseitigen Enden eingelegte Rolle oder Kugel ausgebildet. Um gegenseitige axiale Verschiebungen der Spannelemente oder Spannelementpaare zu vermeiden, können die spannelementseitigen Enden über eine Feder, beispielsweise über einen Federring oder eine Federklammer zusammengehalten werden.

Eine bevorzugte Ausgestaltung der Erfindung sieht vor, dass der Betätigungsmechanismus zwei in je eine stirnseitig sowie radial nach innen offene Ausnehmung der einander radial gegenüberliegenden Spannelemente oder Spannelementpaare einsetzbare Druckstücke sowie mindestens ein Schraubelement zur Verstellung des Abstands zwischen den Druckstücken aufweist. Das Schraubelement kann dabei als Differentialschraube ausgebildet sein, die mit ihren Gewindepartien in miteinander fluchtende, radial ausgerichtete gegenläufige Gewinde der Druckstücke eingreift.

Die Druckstücke können grundsätzlich auch über ein vorzugsweise als Federschlaufe ausgebildetes Biegegelenk einstückig miteinander verbunden sein. In diesem Falle ist das Schraubelement zweckmäßig als durch ein Innengewinde eines der Druckstücke hindurchgreifender und mit seiner Stirnfläche gegen ein Widerlager des anderen Druckstücks anliegender Gewindebolzen ausgebildet. Vorteilhafterweise greift durch ein Innengewinde des anderen Druckstücks ein zweiter Gewindebolzen hindurch, dessen Stirnfläche das Widerlager für den ersten Gewindebolzen bildet.

Um beim Spannvorgang zusätzlich eine Spreizwirkung zwischen den Spannelementen eines jeden Spannelementpaares zu erzielen, weisen die Druckstücke vorteilhafterweise ein zum benachbarten Spannelementpaar hin balliges oder keilförmiges Profil auf. Zur Verbesserung der Spreizwirkung kann das ballige oder keilförmige Profil der Druckstücke in eine in Zustellrichtung flachere Zustellschräge und eine daran anschließende steilere Spannschräge unterteilt werden.

Gemäß einer bevorzugten Ausgestaltung der Erfindung weisen die Druckstücke eine zum benachbarten Spannelement hin teilzylindrische Druckfläche auf, mit der sie beim Spannvorgang auf der vorzugsweise ebenen Anschlagfläche des Spannelements abrollen können. Um die Anpresskraft im Spannzustand auf eine größere Fläche zu verteilen, ist es von Vorteil, wenn die Druckfläche eine an den teilzylindrischen Abschnitt anschließende, in der Spannstellung der Druckstücke gegen die Anlagefläche flächig anliegende ebene Scheitelfläche aufweist. Eine weitere Verbesserung in dieser Hinsicht wird dadurch erzielt, dass das Innengewinde der Druckstücke und das Außengewinde des Schraubelements ein den Toleranzausgleich zulassendes Spiel aufweisen.

Eine vorteilhafte Ausgestaltung der Erfindung sieht vor, dass die Spannelemente und/oder die Druckstücke oberflächengehärtet sind oder eine verschleißfeste und/oder reibungsmindernde Oberflächenbeschichtung tragen, die entweder als Hartstoffschicht, beispielsweise aus Metall, oder als Weichstoffschicht, beispielsweise aus Graphit oder Polyfluortetraethylen ausgebildet sein kann.

Die Spannelemente eines jeden Spannelementpaares sind vorteilhafterweise durch je einen vorzugsweise bis zum zweiten Biegegelenk durchgehenden Axialspalt voneinander getrennt. Dadurch wird zugleich erreicht, dass durch die Axialspalte hindurch ein an dem Schraubelement oder an der Gewindespindel angeordneter Eingriff für ein Schraubwerkzeug radial zugänglich wird. Für den Durchgriff des Schraubwerkzeugs zum Betätigungsmechanismus können zusätzlich auch der Spannschaft und der Hohlschaft miteinander fluchtende Durchbrüche aufweisen.

Um die Spannelemente oder Spannelementpaare von ihrer Spannstellung aus in die vorgespannte Lösestellung bringen zu können, wird gemäß einer bevorzugten Ausgestaltung der Erfindung vorgeschlagen, dass die Druckstücke je einen Mitnehmernocken aufweisen, der gegen eine radial nach außen weisende Anschlagfläche der zugehörigen Spannelemente oder Spannelementpaare anliegt und diese beim Betätigen in Richtung Lösestellung mitnimmt.

Eine weitere vorteilhafte Ausgestaltung der Erfindung sieht vor, dass die spannschaftseitigen Spannflächen und die zugehörigen Spannschultern der Spannelemente im wesentlichen in einer Radialebene ausgerichtet sind, während die hohlschaftseitigen Spannflächen und die zugehörigen Spannschultern der Spannelemente als gegenüber den spannschaftseitigen Spannflächen und -schultern radial nach außen divergierende Schräg- oder Konusflächen ausgebildet sind. Um über den Umfang hinweg eine möglichst gleichmäßige Einspannung zwischen Hohlschaft und Spannschaft zu erzielen, ist es von Vorteil, wenn die Spannschultern der Spannelemente eines jeden Spannelementpaares einen auf die Spannschaftachse bezogenen Zentralwinkel von 30° bis 120°, vorzugsweise 50° bis 90° miteinander einschließen.

Die hohlschaftseitigen Spannschultern der Spannelemente sind in Umfangsrichtung durch im Wesentlichen radial ausgerichtete Begrenzungskanten und in radialer Richtung durch eine im Wesentlichen in Umfangsrichtung ausgerichtete Begrenzungskante begrenzt. Um beim Spannvorgang unter Berücksichtigung der gegebenen Maßtoleranzen lokale Druckspitzen im Bereich der Spannschultern zu vermeiden, wird gemäß einer bevorzugten Ausgestaltung der Erfindung vorgeschlagen, dass zumindest eine der Begrenzungskanten konvex gerundet oder angefast ist.

Eine besonders einfache Montage des Spanneinsatzes wird dadurch ermöglicht, dass der Spanneinsatz mit seinen spannschaftseitigen Spannschultern bajonettartig mit dem Spannschaft verriegelbar und in der Verriegelungsstellung formschlüssig gegen Verdrehung sicherbar ist. Zur Verdrehsicherung kann der Spanneinsatz in seiner Verriegelungsstellung mittels einer die Spannfläche des Spannschafts achsparallel durchdringenden, in eine radial randoffene Ausnehmung eines der Spannelemente oder Spannelementpaare formschlüssig eingreifenden Arretierungsbolzens festgelegt werden. Wahlweise kann der Spanneinsatz um 180° verdreht in den Spannschaft eingesetzt und dort verriegelt werden.

Gemäß einer bevorzugten Ausgestaltung der Erfindung weist der Hohlschaft eine sich zu seinem freien Ende kegelförmig verjüngende Außenfläche und der Spannschaft eine entsprechend konische Aufnahme auf. Die Einspannung erfolgt zweckmäßig dadurch, dass der Hohlschaft von einer Ringschulter begrenzt ist, die in der Spannstellung der Spannelemente gegen eine ringförmige Planfläche des Spannschafts anpreßbar ist.

Da der kegelförmige Hohlschaft und die konische Aufnahme im Spannzustand selbsthemmend miteinander verbunden sind, ist für den Werkzeugwechsel zusätzlich ein Auswurfmechanismus erforderlich. Eine bevorzugte Ausgestaltung der Erfindung sieht daher vor, dass die Druckstücke an ihren einander zugewandten Seiten einen Spalt begrenzen, in den ein auf der Hohlschaftseite, vorzugsweise am hohlschaftseitigen Zentrierelement überstehender, unter der Einwirkung der Druckstücke mit einer axialen Kraft beaufschlagbarer Auswurfkeil eingreift. Zweckmäßig sind die zum Auswurfkeil weisenden Spaltränder des Druckstücks keilförmig angefast.

Gemäß einer weiteren bevorzugten Ausgestaltung der Erfindung ist ein den Spannschaft außenseitig umgreifender, an seinen beiden Rändern gegenüber dem Spannschaft abdichtbarer Verschlussring vorgesehen, der zwischen je einer die Durchbrüche verschließenden und freigebenden Endstellung begrenzt axial gegenüber dem Spannschaft verschiebbar ist. Der Spannschaft weist zu diesem Zweck im Bereich der Durchbrüche eine ringförmige Eindrehung auf, an die sich über je eine Ringstufe zur Stirnseite des Spannschafts hin einen Auflaufbereich größeren Durchmessers und zur Wurzel des Spannschafts hin ein Führungsbereich größeren Durchmessers anschließt, während der Verschlussring je einen in der ringförmigen Eindrehung und im Führungsbereich gegen die Außenfläche des Spannschafts anliegenden Dichtring aufweist. In der Schließstellung des Verschlussrings ist zweckmäßig mindestens einer der Dichtringe in eine ringförmige Rastvertiefung des Spannschafts einrastbar.

Gemäß einer weiteren bevorzugten Ausgestaltung der Erfindung weist der Hohlschaft an seinem freien Ende mindestens eine Nut für den Eingriff eines spannschaftseitigen Mitnehmers auf, während der Spannschaft mindestens eine seitlich gegen eine Axialebene versetzte Bohrung zur Aufnahme eines in die Nut oder in eine Ausnehmung des Hohlschafts eingreifenden, das Spiel des Mitnehmers in der Nut in einer Drehrichtung des Spannschafts eliminierenden, biegeelastisch ausgebildeten Bolzens aufweist. Die Bohrung ist dabei zweckmäßig als Gewindebohrung zur Aufnahme des ein entsprechendes Gewinde aufweisenden Biegebolzens ausgebildet. Der Biegebolzen weist vorteilhafterweise einen Gewindeabschnitt, einen Biegeabschnitt und einen am freien Ende des Biegeabschnitts hammerartig verdickenden Mitnehmerabschnitt auf. Mit dem erfindungsgemäßen Biegebolzen wird das Spiel zwischen der Nut und dem Mitnehmer einseitig in Belastungsrichtung beseitigt, wobei der Mitnehmer an der Nutenflanke anliegt, über die das Drehmoment, welches aus der Hauptschnittkraft resultiert, aufgenommen wird. Um die Spannvorrichtung sowohl bei linksdrehenden als auch bei rechtsdrehenden Werkzeugen einsetzen zu können, ist es von Vorteil, wenn zwei zu der Axialebene spiegelsymmetrisch angeordnete Bohrungen zur wahlweisen Aufnahme eines Biegebolzens im Spannschaft angeordnet sind.

Im Folgenden wird die Erfindung anhand der in der Zeichnung in schematischer Weise dargestellten Ausführungsbeispiele näher erläutert. Es zeigen
- Fig. 1a und b: einen Längsschnitt durch eine Schnittstelle zwischen einer Maschinenspindel und einem Werkzeugkopf mit integriertem Spannmechanismus in Spannstellung und in Lösestellung des Spanneinsatzes;
- Fig. 2: eine Darstellung entsprechend Fig. 1a für ein abgewandeltes Ausführungsbeispiel;
- Fig. 3: einen Längsschnitt durch ein weiteres Ausführungsbeispiel einer Schnittstelle in einer Darstellung entsprechend Fig. 1a;
- Fig.4a: ein gegenüber Fig. 3 abgewandeltes Ausführungsbeispiel einer Schnittstelle;
- Fig. 4b: einen vergrößerten Ausschnitt aus Fig. 4a;
- Fig. 5: einen Längsschnitt durch ein weiteres Ausführungsbeispiel einer Schnittstelle in einer Darstellung entsprechend Fig. 1a;
- Fig. 6: ein weiteres abgewandeltes Ausführungsbeispiel einer Schnittstelle in einer Darstellung entsprechend Fig. 1a;
- Fig. 7a und b: einen Querschnitt und einen Längsschnitt durch den Spannschaft mit Hohlkegelaufnahme für eine Schnittstelle entsprechend Fig. 1 bis 6;
- Fig. 7c: einen vergrößerten Ausschnitt aus Fig. 7a mit einer Darstellung eines biegeelastischen Bolzens;
- Fig. 8a und b: eine Darstellung entsprechend Fig. 1a und b für ein abgewandeltes Ausführungsbeispiel;
- Fig. 8c: den Zentrierkäfig für den Spanneinsatz nach Fig. 8a und b;
- Fig. 8d: einen Schnitt durch den Spanneinsatz nach Fig. 8a und b im Bereich des Betätigungsmechanismus;
- Fig. 9a und b: einen vergrößerten Ausschnitt aus Fig. 8b aus dem Bereich des spannschaftseitigen Zentrierkäfigs mit Wuchtausgleich an den spannschaftseitigen Enden der Spannelemente;
- Fig. 10: ein gegenüber Fig. 8c abgewandeltes Ausführungsbeispiel des Zentrierkäfigs für die Minimalmengenschmierung.

Die dargestellte Schnittstelle besteht im wesentlichen aus einem am stirnseitigen Ende einer Maschinenspindel 10 angeordneten Spannschaft 12, einem einen Werkzeugschaft 14 aufweisenden Werkzeugkopf 16, einer im Spannschaft 12 angeordneten konischen Aufnahme 18 für den an seiner Außenfläche 20 kegelförmigen Werkzeugschaft 14 sowie einen Spannmechanismus 22, der bei dem gezeigten Ausführungsbeispiel zwei im Winkelabstand voneinander angeordnete Spannelementpaare 24, 24' und einen Betätigungsmechanismus 26 zur begrenzten Verstellung der Spannelementpaare zwischen einer Lösestellung und einer Spannstellung aufweist. Der Spannschaft 12 und/oder der Werkzeugschaft 14 können auch Bestandteile eines Adapters oder eines Verlängerungsstücks sein.

Der Spannmechanismus 22 hat primär die Aufgabe, im Spannzustand die Anpresskraft zwischen den einander zugewandten ringförmigen Planflächen 28,30 des Werkzeugkopfs 16 und des Spannschafts 12 zu erzeugen. Eine weitere Funktion des Spannmechanismus 22 besteht darin, den Werkzeugkopf 16 beim Lösevorgang aus der Aufnahme 18 unter Auftrennung der selbsthemmenden Verbindung zwischen dem Werkzeugschaft 14 und der konischen Aufnahme 18 auszuwerfen.

Die Spannelemente 25 sind mit je zwei in axialem Abstand voneinander angeordneten, einander zugewandten Spannschultern 38, 40 an im Inneren des Spannschafts 12 und des als Hohlschaft ausgebildeten Werkzeugschafts 14 angeordneten, voneinander abgewandten Spannflächen 42, 44 abstützbar. Die spannschaftseitigen Spannflächen 42 und die zugehörigen Spannschultern 38 der Spannelemente 25 sind im wesentlichen in einer Radialebene ausgerichtet, während die hohlschaftseitigen Spannflächen 44 und die zugehörigen Spannschultern 40 der Spannelemente 25 als gegenüber den spannschaftseitigen Spannflächen und -schultern 42, 38 radial nach außen divergierende Konusflächen ausgebildet sind. Die Spannschultern 40 der Spannelemente 25 eines jeden Spannelementpaars 24, 24' schließen einen auf die Spannschaftachse bezogenen Zentralwinkel von 50° bis 90° ein. Dadurch wird eine weitgehend gleichmäßige Krafteinleitung über den Umfang des Werkzeugschafts 14 erzielt.

Die hohlschaftseitigen Spannschultern 40 der Spannelemente 25 sind in Umfangsrichtung durch im Wesentlichen radial ausgerichtete Begrenzungskanten 39 und in radialer Richtung durch eine im Wesentlichen in Umfangsrichtung ausgerichtete Begrenzungskante 41 begrenzt. Um bei den gegebenen Maßtoleranzen lokale Druckspitzen beim Spannvorgang zu vermeiden, ist zumindest eine der Begrenzungskanten 39, 41 konvex gerundet oder angefast.

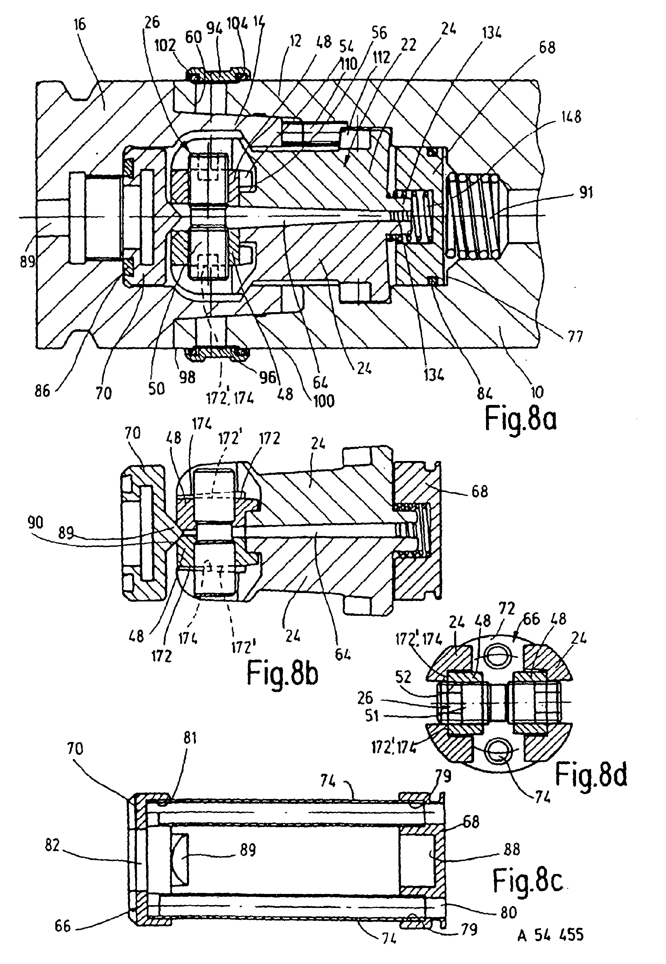

Der Spanneinsatz 32 ist mit seinen spannschaftseitigen Spannschultern 38 bajonettartig mit den Spannflächen 42 des Spannschafts 12 verriegelbar und in der Verriegelungsstellung mittels eines Arretierungsbolzens 110 formschlüssig gegen Verdrehen sicherbar. Der Arretierungsbolzen 110 durchdringt die Spannfläche 42 des Spannschafts 12 achsparallel und greift in eine radial randoffene Ausnehmung 112 zwischen den beiden Spannschultern 38 eines der Spannelementpaare 24, 24' formschlüssig ein (Fig. 8a).

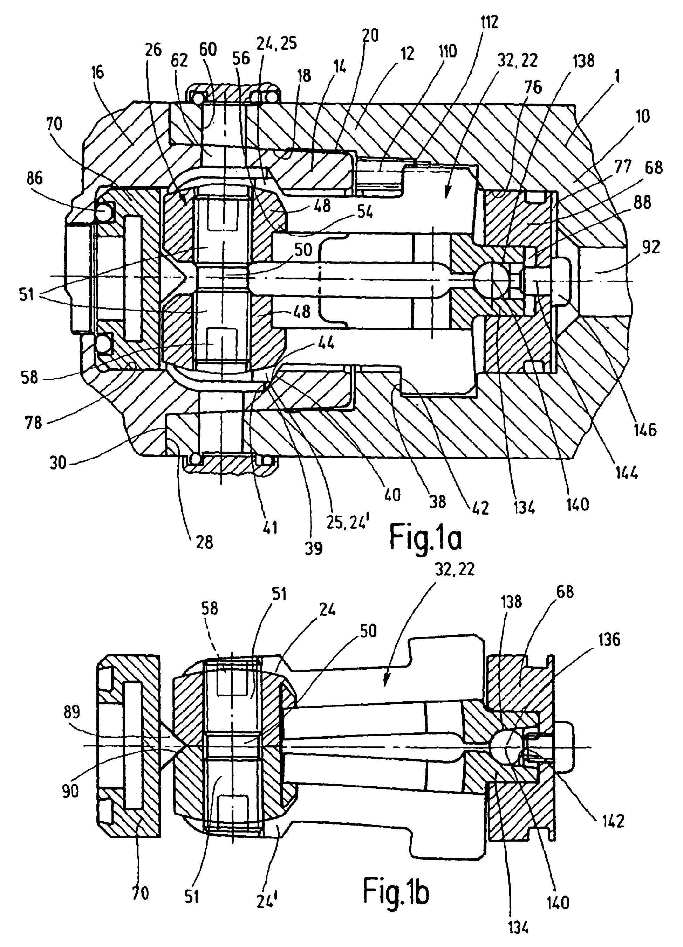

Der Betätigungsmechanismus 26 weist zwei in je eine stirnseitig sowie radial nach innen offene Ausnehmung 46 der einander radial gegenüberliegenden Spannelementpaare 24, 24' einsetzbare Druckstücke 48 sowie mindestens ein Schraubelement 50 zur Verstellung des Abstands zwischen den Druckstücken 48 auf. Bei dem in Fig. 1a gezeigten Ausführungsbeispiel sind zwei voneinander unabhängige Druckstücke 48 vorgesehen. Das Schraubelement 50 ist als Differentialschraube ausgebildet, die mit ihren Gewindepartien 51 in miteinander fluchtende, radial ausgerichtete gegenläufige Innengewinde 52 der Druckstücke 48 eingreift.

Die Druckstücke 48 weisen ihrerseits ein im wesentlichen radial nach außen zum benachbarten Spannelementpaar 24, 24' hin balliges oder keilförmiges Profil auf, das dafür sorgt, dass die Spannelemente 25 der Spannelementpaare 24, 24' beim Spannvorgang aufgespreizt werden. Weiter ist an den Druckstücken 48 je ein Mitnehmernocken 54 angeformt, der gegen eine radial nach außen weisende Anschlagfläche 56 der zugehörigen Spannelementpaare 24, 24' anliegt. Zur Betätigung des Schraubelements 50 weist dieses an seinen Stirnseiten Eingrifföffnungen 58 auf, in die von außen her durch Durchbrüche 60, 62 im Spannschaft 12 und im Werkzeugschaft 14 hindurch ein Betätigungsschlüssel einführbar ist.

Der Spannmechanismus 22 bildet zusammen mit einem Zentrierkäfig 66 (Fig. 8c) eine Baueinheit. Der Zentrierkäfig 66 besteht dabei aus zwei die stirnseitigen Enden des Spanneinsatzes 32 übergreifenden kolbenartigen Zentrierelementen 68, 70, die durch in axial durchgehenden Freisparungen 72 des Spanneinsatzes 32 verlaufende, als Kühlmittelrohre 74 ausgebildete Stege starr miteinander verbunden sind und in je eine achszentrale, zylindrische Ausnehmung 76,78 im Bodenbereich des Spannschafts 12 und des Hohlschafts 14 mit axialem Spiel unter Freilassung eines axialen Freiraums 77 eingreifen. Die Zentrierelemente 68, 70 weisen mit den an ihren Enden in die Einsteckbohrungen 79, 81 eingreifenden und dort eingelöteten oder eingeklebten Kühlmittelrohren 74 kommunizierende Zulauföffnungen 80 und Auslauföffnungen 82 auf (Fig. 8c).

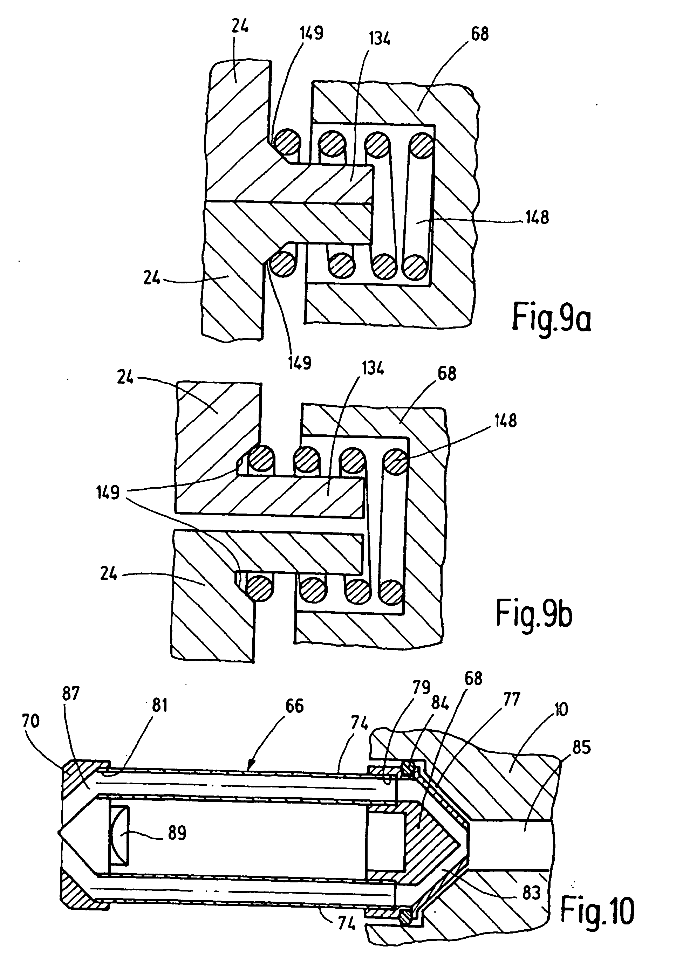

Bei dem in Fig. 10 gezeigten Ausführungsbeispiel weisen die Zentrierelemente 68, 70 im Unterschied zu den anderen Ausführungsbeispielen schräg verlaufende Zulaufkanäle 83 auf, über die die Zulauföffnungen 80 der Kühlmittelrohre 74 mit einem Zentralkanal 85 des Spannschafts verbunden ist. Dadurch werden Prallkanten vermieden, die zu einer unerwünschten Entmischung des Kühlmittelfluids führen könnten. Aus dem gleichen Grund sind auf der Auslaufseite die Auslauföffnungen 82 über schräge Auslaufkanäle 87 mit dem hohlschaftseitigen Zentralkanal 89 verbunden. Diese Bauweise ist vor allem für die Minimalmengenschmierung von Vorteil, bei der ein ölhaltiges Aerosol als Kühlmittelfluid verwendet wird.

Das spannschaftseitige Zentrierelement 68 ist mit einer Radialdichtung 84 innerhalb der zugehörigen zylindrischen Ausnehmung 76 druckdicht abgedichtet, während das hohlschaftseitige Zentrierelement 70 mit einer die Auslauföffnung 62 ringförmig umgebenden Dichtung 86 innerhalb der zugehörigen zylindrischen Ausnehmung 78 abdichtbar ist. Bei den gezeigten Ausführungsbeispielen ist die Dichtung 86 als Axialdichtung ausgebildet.

Das spannschaftseitige Zentrierelement 68 weist außerdem eine achszentrale Tasche 88 zur axial und radial schwimmenden Aufnahme der spannschaftseitigen Enden 134 des Spanneinsatzes 32 auf. Dadurch kann der Zentrierkäfig 66 axial gegenüber dem Spanneinsatz 62 verschoben werden. Diese Verschiebemöglichkeit kann zum Auswerfen des Werkzeugkopfs 16 beim Lösevorgang genutzt werden, wenn die Druckstücke 48 an ihren einander zugewandten Seiten einen Spalt begrenzen, in den ein am hohlschaftseitigen Zentrierelement 70 überstehender Auswurfkeil 89 eingreift. Beim Lösevorgang wird der Zentrierkäfig 66 über den Auswurfkeil 89 unter der Einwirkung der Druckstücke 48 mit einer axialen Kraft beaufschlagt, die aufgrund der Verschiebbarkeit des Zentrierkäfigs 66 zum Auswurf des Werkzeugkopfs 16 führt. Zur Verbesserung der Kraftumsetzung sind die zum Auswurfkeil 89 weisenden Spaltränder 90 der Druckstücke keilförmig angefast. Das spannschaftseitige Zentrierelement 68 sorgt aufgrund seiner Kolbenwirkung in der zylindrischen Ausnehmung 76 außerdem dafür, dass der Zentrierkäfig 66 bei Druckbeaufschlagung über die Kühlmittelzuleitung 92 in Richtung Werkzeugkopf 16 verschoben wird, so dass der Spaltbereich zwischen dem Zentrierelement 70 und der zylindrischen Ausnehmung 78 über die Dichtung 86 gegen Flüssigkeitsaustritt abgedichtet wird. Eine weitere Verbesserung in dieser Hinsicht kann dadurch erzielt werden, dass in der zylindrischen Ausnehmung 76 des Spannschafts ein als Schraubendruckfeder ausgebildetes Federorgan 91 angeordnet ist, das zwischen dem Spannschaft 10 und dem spannschaftseitigen Zentrierelement 68 leicht vorgespannt ist, so dass der Zentrierkäfig 66 leicht in Richtung Werkzeugkopf gedrückt wird (Fig. 8a).

Der Spannschaft 12 wird außenseitig von einem Verschlussring 94 umgriffen, der zwischen einer die Durchbrüche 60 verschließenden und freigebenden Endstellung begrenzt axial gegenüber dem Spannschaft 12 verschiebbar ist. Zu diesem Zweck weist der Spannschaft im Bereich der Durchbrüche 60 eine ringförmige Eindrehung 96 auf, an die sich über je eine Ringstufe zur Stirnseite des Spannschafts 12 hin ein Auflaufbereich 98 größeren Durchmessers und zur Wurzel des Spannschafts 12 hin ein Führungsbereich 100 größeren Durchmessers anschließt. Der Verschlussring 94 weist je einen in der ringförmigen Eindrehung 96 und im Führungsbereich 100 gegen die Außenfläche des Spannschafts anliegenden Dichtring 102, 104 auf, wobei in der in Fig. 8a gezeigten Schließstellung des Verschlussrings 94 einer der Dichtringe 102, 104 in eine nicht dargestellte ringförmige Rastvertiefung des Spannschafts einrastbar sein kann.

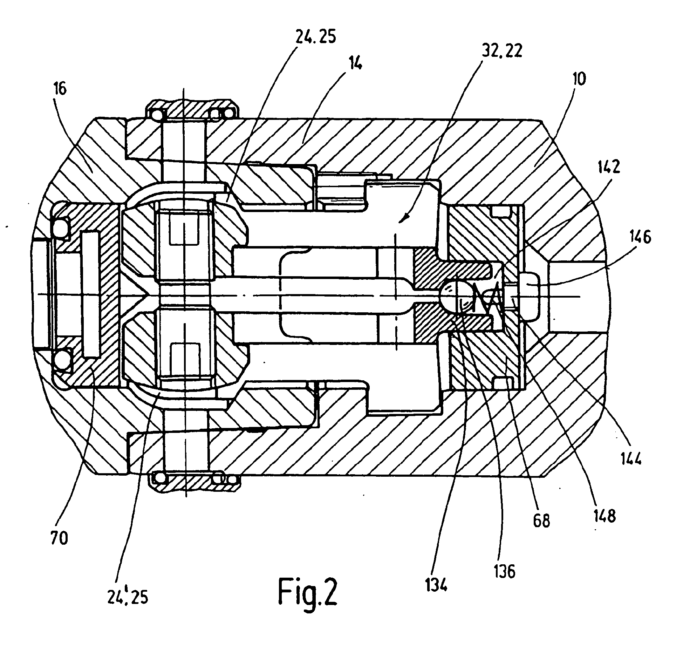

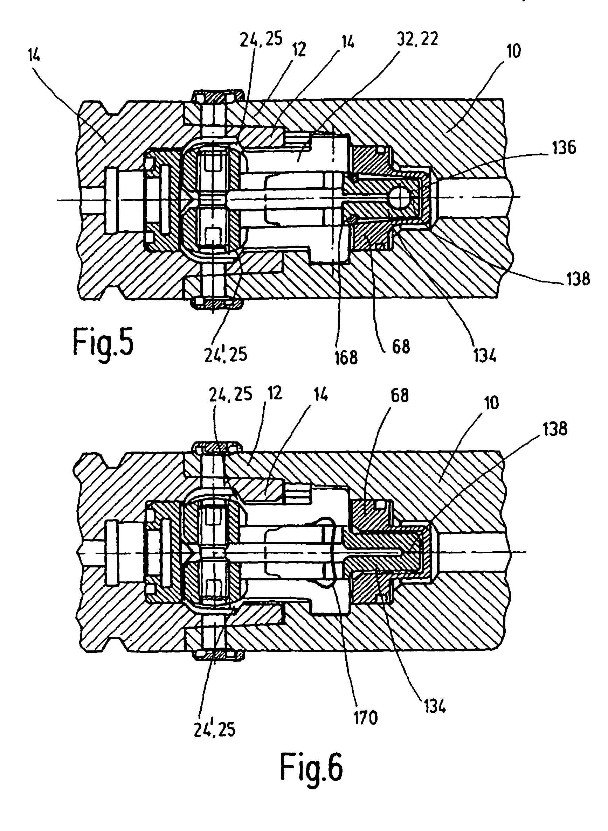

Die Schnittstellen weisen durchweg einen aus zwei getrennten Spannelementen oder Spannelementpaaren 24, 24' bestehenden Spanneinsatz 32 auf. Die Spannelemente oder Spannelementpaare 24, 24' liegen an ihren spannschaftseitigen Enden 134 entweder unmittelbar (Fig. 6) oder mittelbar (Fig. 1 bis 5) über ein rollenförmiges oder kugelförmiges Zwischenglied 136 gegeneinander so an, dass sie über den Betätigungsmechanismus 26 um eine durch die Anlagestelle 138 gebildete Kippachse 140 gegeneinander verschwenkbar sind. Die spannschaftseitigen Enden 134 der Spannelemente oder Spannelementpaare 24, 24' können dabei im Bereich der Anlagestelle außen- und/oder innenseitig ballig ausgebildet sein, so dass sie leichter gegeneinander oder gegen die benachbarte spannschaftseitige Wand abrollen können. Durch das rollen- oder kugelförmige Zwischenglied 136 kann dieser Abrollvorgang verbessert werden. Die axial überstehenden spannschaftseitigen Enden 134 bilden bei den Ausführungsbeispielen nach Fig. 1, 2 und 5 eine achszentral angeordnete Aufnahme 142 für das rollen- oder kugelförmige Zwischenelement, wobei bei den Ausführungsbeispielen nach Fig. 1 und 2 zusätzlich ein durch eine zentrale Gewindebohrung des spannschaftseitigen Zentrierelements 68 mit seinem Schaft 144 in die Aufnahme 142 eingreifendes Schraubelement 146 vorgesehen ist, das den axialen Verschiebeweg des Zentrierkäfigs 66 relativ zum Spanneinsatz 32 begrenzt. Wie aus Fig. 8a bis d zu ersehen ist, kann der vorstehend beschriebene Kippvorgang auch ohne Zwischenglied und ohne gegenseitige Anlage der spannschaftseitigen Enden 134 der Spannelemente 25 erzielt werden.

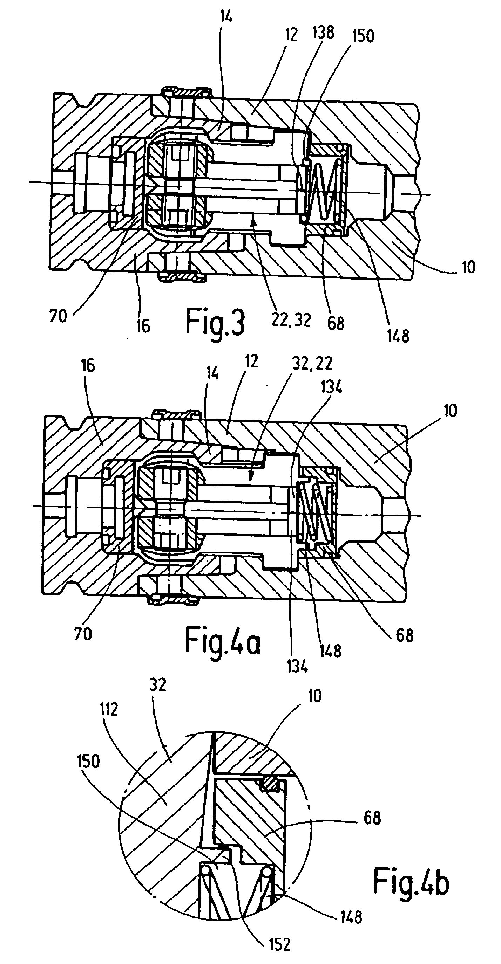

Bei den Ausführungsbeispielen nach Fig. 2 bis 4 und 8 ist zusätzlich zwischen dem Spannelement 32 und dem Zentrierkäfig 66 ein den Zentrierkäfig 66 in Richtung Spannschaft drängendes vorgespanntes Federelement 148 angeordnet, das mit seinem einen Ende beim Ausführungsbeispiel nach Fig. 2 an dem kugelförmigen Zwischenglied 136 und bei den Ausführungsbeispielen nach Fig. 3, 4 und 8 unmittelbar am spannschaftseitigen Ende 134 des Spanneinsatzes 32 und mit seinem anderen Ende am Zentrierelement abgestützt ist. Das Federelement 148 ist bei diesen Ausführungsbeispielen durchweg als Schraubendruckfeder ausgebildet. Durch die Rückstellung des Zentrierkäfigs 66 über das Federelement 148 wird das Einführen des als Hohlkegel ausgebildeten Werkzeugschafts 14 erleichtert. Die in Fig. 9a und b gezeigten Ausführungsbeispiele unterscheiden sich von den Ausführungsbeispielen nach Fig. 8a und b dadurch, dass die Spannelemente 25 des Spanneinsatzes über die Schraubendruckfeder 148 zum Zwecke des Wuchtausgleichs entweder radial nach innen oder nach außen gedrückt werden. Dies wird über die schrägen Abstützschultern 149 für die Schraubendruckfeder erreicht, die im Falle der Fig. 9a nach innen und im Falle der Fig. 9b nach außen weisen.

Bei den Ausführungsbeispielen näch Fig. 3 und 4a und b greift die Schraubendruckfeder 148 mit ihrem einen Ende in einen Axialeinstich 150 in den spannschaftseitigen Enden 134 der Spannelemente 25 ein, so dass sich auch ohne einen über das spannschaftseitige Ende 134 überstehenden Ansatz eine Zentrierung ergibt. Eine weitere Verbesserung in dieser Hinsicht wird bei dem in Fig. 4a und b gezeigten Ausführungsbeispiel erzielt, bei welchem im Bereich der spannschaftseitigen Enden 134 der Spannelemente zusätzlich eine segmentförmige Nase 152 zur Zentrierung der Spannelemente 24, 24' im Bereich des spannschaftseitigen Zentrierelements 68 liegt.

Bei dem in Fig. 5 gezeigten Ausführungsbeispiel sind die Spannelemente 25 im Bereich der Wurzel der spannschaftseitigen Enden 134 durch einen Federring 168 zusammengehalten. In der Spannstellung weisen die spannschaftseitigen Enden 134 eine konische und in der Lösestellung eine zylindrische Außenfläche auf. Letzteres ist auch bei dem Ausführungsbeispiel nach Fig. 8a bis c der Fall.

Im Falle der Fig. 6 ist im Abstand von den spannschaftseitigen Enden 134 eine die Spannelemente 25 miteinander verbindende Federklammer 170 vorgesehen.

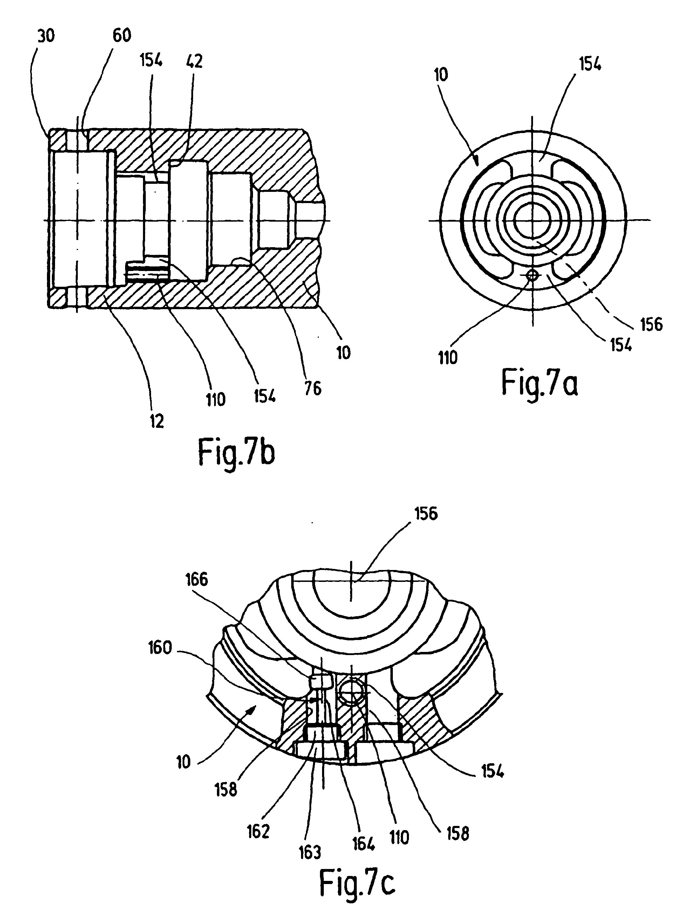

Aus den Fig. 7a bis c ist zu ersehen, dass der Spannschaft im unteren Bereich der konischen Aufnahme 18 mindestens einen Mitnehmer 154 aufweist, der in eine Nut am freien Ende des in den betreffenden Figuren nicht dargestellten Hohlschafts eingreift. Der Mitnehmer 154 sorgt für einen Formschluss zwischen dem Spannschaft 12 und dem Hohlschaft 14, so dass das mit dem Hohlschaft 14 verbundene Werkzeug immer eine definierte Ausrichtung in Umfangsrichtung gegenüber dem Spannschaft 12 aufweist. Um das zum Fügen des Hohlschafts 14 erforderliche Spiel zwischen dem Mitnehmer 154 und der Nut in der Belastungsrichtung gezielt einseitig zu beseitigen, sind in der Wandung des Spannschafts 12 zwei zu einer Axialebene 156 spiegelbildlich versetzt angeordnete, zur Axialebene parallele Bohrungen 158 vorgesehen, die den Mitnehmer 154 innenseitig anschneiden. Je nach links- oder rechtsdrehendem Werkzeug wird in eine der beiden Bohrungen 158 ein Biegebolzen 160 eingesetzt, der einen Gewindeabschnitt 162 mit Senkkopf 163, einen Biegeabschnitt 164 und einen hammerartig verdickten Mitnehmerabschnitt 166 aufweist. Der Mitnehmerabschnitt 166 drückt unter der Einwirkung einer durch eine Durchbiegung des Biegeabschnitts 164 erzeugten Federkraft gegen eine Flanke der Nut an und sorgt dafür, dass das Spiel des Mitnehmers 154 in der hohlschaftseitigen Nut in der betreffenden Bearbeitungsrichtung eliminiert ist. Zur Vermeidung von Schmutzeintritt und Kühlmittelaustritt wird die jeweils zweite Bohrung durch einen nicht dargestellten Deckel verschlossen.

Bei dem in Fig. 8a bis d gezeigten Ausführungsbeispiel sind die Spannelemente 25 an ihrem hohlschaftseitigen Kopfteil zwar mit einer Ausnehmung 46 zur Aufnahme der Druckstücke 48 versehen, aber ansonsten nicht zweigeteilt. Die Spannelemente 25 sind so dimensioniert, dass sie in den vorgefertigten Zentrierkäfig eingesteckt und aus diesem entnommen werden können. Die Druckfläche 172 der Druckstücke 48 ist hierbei teilzylindrisch gekrümmt, so dass sie beim Spannvorgang auf der benachbarten Anschlagfläche 174 des Spannelements 25 abrollen kann. In ihrem mittleren Bereich weist die Druckfläche 172 eine Scheitelfläche 172' auf, mit der sie im Spannzustand gegen die ebene Anschlagfläche 174 flächig anliegt. Um Verkantungen in diesem Bereich zu vermeiden, weisen die Innengewinde 52 der Druckstücke und die Gewindepartien 51 des Schraubelements 50 ein den Toleranzausgleich zulassendes Spiel auf. In dem in Fig. 8a gezeigten Spannzustand befinden sich die Anlagestellen zwischen Druckfläche 172 und Anschlagfläche 174 in unmittelbarer Achsnähe des Schraubelements 50. Die spannschaftseitigen Enden 134 der Spannelemente 25 greifen im montierten Zustand in die Tasche 88 des schaftseitigen Zentrierelements 68 ein und werden dort von der Druckfeder 148 umgriffen.

Zusammenfassend ist folgendes festzuhalten: Die Erfindung bezieht sich auf eine Vorrichtung zum Verbinden eines einen Werkzeugschaft 14 aufweisenden Werkzeugkopfs 16 mit einem eine Aufnahme für den Werkzeugschaft 14 aufweisenden Spannschaft 12 mit Hilfe eines Spannmechanismus. Der Spannmechanismus weist mindestens zwei im Winkelabstand voneinander angeordnete, in ihrer Spannstellung den vorzugsweise als Hohlschaft ausgebildeten Werkzeugschaft 14 und den Spannschaft 12 kraftschlüssig miteinander verbindende Spannelemente 25 und einen Betätigungsmechanismus 26 zur begrenzten Verstellung der Spannelemente 25 zwischen einer Lösestellung und einer Spannstellung auf, wobei die Spannelemente unter der Krafteinwirkung des Betätigungsmechanismus in ihrer Spannstellung gehalten werden. Ein funktionsgerechter und dennoch einfacher Aufbau des Spannmechanismus wird dadurch ermöglicht, dass zwei einander radial gegenüberliegende Spannelemente oder Spannelementpaare 24, 24' als getrennte Teile ausgebildet sind, die unter Bildung eines Spanneinsatzes 32 an ihren spannschaftseitigen Enden 134 oder in axialem Abstand von diesen unmittelbar oder mittelbar über ein Zwischenglied 136 gegeneinander anliegen und über den Betätigungsmechanismus 26 um eine durch die Anlagestelle 138 gebildete Kippachse 140 gegeneinander verschwenkbar sind.

## Patentansprüche

1. Vorrichtung zum Verbinden eines einen Hohlschaft aufweisenden Werkzeugkopfs mit einem eine Aufnahme (18) für den Hohlschaft (14) aufweisenden, vorzugsweise stirnseitig an einer Maschinenspindel (10) angeordneten Spannschaft (12), mit mindestens zwei einen Winkelabstand voneinander aufweisenden, mit ihrem einen Ende in die Aufnahme (18) des Spannschafts (12) einsetzbaren und sich mit ihrem anderen Ende in das Innere des einzuspannenden Hohlschafts (14) erstreckenden klauen- oder klammerartigen Spannelementen (25), die mit je zwei in axialem Abstand voneinander angeordneten, einander zugewandten Spannschultem (38,40) an im Inneren des Spannschafts (12) und des Hohlschafts (14) angeordneten, voneinander abgewandten Spannflächen (42,44) abstützbar sind, und mit einem Betätigungsmechanismus (26) zur Verstellung der Spannelemente (25) zwischen einer Lösestellung und einer Spannstellung, wobei zwei einander radial gegenüberliegende Spannelemente oder Spannelementpaare (24,24') als getrennte Teile ausgebildet sind, die gegebenenfalls über ein Zwischenglied (136) gegeneinander anliegen und über den Betätigungsmechanismus (26) gegeneinander verschwenkbar sind, **dadurch gekennzeichnet, dass** die Spannelemente (25) oder Spannelementpaare (24,24') unter Bildung eines Spanneinsatzes (32) an ihren spannschaftseitigen Enden (134) unmittelbar oder mittelbar über das Zwischenglied (136) gegeneinander anliegen und um eine durch die Anlagestelle (138) gebildete Kippachse (140) gegeneinander verschwenkbar sind.

2. Vorrichtung nach Anspruch 1, **dadurch gekennzeichnet, dass** die Spannelementpaare (24,24') an ihren spannschaftseitigen Enden (134) paarweise über ein quer zur Kippachse (140) ausgerichtetes Biegegelenk einstückig miteinander verbundene und um deren Biegeachse mit Hilfe des Betätigungsmechanismus (26) gegeneinander verbiegbare Spannelemente (25) aufweisen.

3. Vorrichtung nach Anspruch 1 oder 2, **dadurch gekennzeichnet, dass** die spannschaftseitigen Enden (134) der Spannelemente oder Spannelementpaare (24,24') im Bereich der Anlagestelle (138) außen- und/oder innenseitig ballig ausgebildet sind.

4. Vorrichtung nach einem der Ansprüche 1 bis 3, **dadurch gekennzeichnet, dass** das Zwischenglied (136) als lose zwischen den spannschaftseitigen Enden (134) eingelegte Rolle oder Kugel ausgebildet ist.

5. Vorrichtung nach einem der Ansprüche 1 bis 4, **dadurch gekennzeichnet, dass** die spannschaftseitigen Enden (134) über eine Feder, vorzugsweise über einen Federring (168) oder eine Federklammer (170) zusammengehalten sind.

6. Vorrichtung nach einem der Ansprüche 1 bis 5, **dadurch gekennzeichnet, dass** der Betätigungsmechanismus (26) zwei in je eine stirnseitig sowie radial nach innen offene Ausnehmung (46) der einander radial gegenüberliegenden Spannelemente oder Spannelementpaare (24,24') einsetzbare Druckstücke sowie mindestens ein Schraubelement (50) zur Verstellung des Abstands zwischen den Druckstücken (48) aufweist.

7. Vorrichtung nach Anspruch 6, **dadurch gekennzeichnet, dass** das Schraubelement (50) als Differentialschraube ausgebildet ist, die mit ihren Gewindepartien (51) in miteinander fluchtende, radial ausgerichtete gegenläufige Innengewinde (52) der Druckstücke (48) eingreift.

8. Vorrichtung nach Anspruch 6 oder 7, **dadurch gekennzeichnet, dass** die Druckstücke (48) über ein vorzugsweise als Federschlaufe ausgebildetes Biegegelenk (49) einstückig miteinander verbunden sind.

9. Vorrichtung nach einem der Ansprüche 6 bis 8, **dadurch gekennzeichnet, dass** das Schraubelement (50) als durch ein Innengewinde (52) eines der Druckstücke (48) hindurchgreifender und mit seiner Stirnfläche gegen ein Widerlager (53) des anderen Druckstücks (48) anliegender Gewindebolzen ausgebildet ist.

10. Vorrichtung nach Anspruch 9, **dadurch gekennzeichnet, dass** durch ein Innengewinde (52) des anderen Druckstücks (48) ein zweiter Gewindebolzen hindurchgreift, dessen Stirnfläche das Widerlager (53) für den ersten Gewindebolzen bildet.

11. Vorrichtung nach einem der Ansprüche 6 bis 10, **dadurch gekennzeichnet, dass** die Druckstücke (48) ein zum benachbarten Spannelementpaar (24,24') hin balliges oder keilförmiges Profil aufweisen.

12. Vorrichtung nach Anspruch 11, **dadurch gekennzeichnet, dass** das ballige oder keilförmige Profil der Druckstücke (48) in eine in Zustellrichtung flachere Zustellschräge und eine an diese anschließende steilere Spannschräge unterteilt ist.

13. Vorrichtung nach einem der Ansprüche 6 bis 10, **dadurch gekennzeichnet, dass** die Druckstücke (48) eine zum benachbarten Spannelement (25) hin teilzylindrische, auf dessen Anlagefläche (174) beim Spannvorgang abrollende Druckfläche (172) aufweisen.

14. Vorrichtung nach Anspruch 13, **dadurch gekennzeichnet, dass** die Spannelemente (25) eine dem jeweiligen Druckstück (48) zugewandte, vorzugsweise ebene Anlagefläche (174) aufweisen und dass die Druckflächen (172) der Druckstücke (48) eine in der Spannstellung der Druckstücke gegen die Anlagefläche (174) flächig anliegende Scheitelfläche (172') aufweisen.

15. Vorrichtung nach einem der Ansprüche 6 bis 14, **dadurch gekennzeichnet, dass** die Innengewinde (52) der Druckstücke (48) und die Gewindepartien (51) des Schraubelements (50) ein den Toleranzausgleich zulassendes Spiel aufweisen.

16. Vorrichtung nach einem der Ansprüche 1 bis 15, **dadurch gekennzeichnet, dass** die Spannelemente (25) und/oder die Druckstücke (48) eine verschleißfeste und/oder reibungsmindemde Oberflächenbeschichtung tragen, oder oberflächengehärtet sind.

17. Vorrichtung nach einem der Ansprüche 1 bis 16, **dadurch gekennzeichnet, dass** die Spannelemente (25) eines jeden Spannelementpaars (24,24') durch einen vorzugsweise bis zum betreffenden Biegegelenk durchgehenden Axialspalt (64) voneinander getrennt sind.

18. Vorrichtung nach Anspruch 17, **dadurch gekennzeichnet, dass** das Schraubelement (50) mindestens einen durch einen der Axialspalte (64) hindurch radial zugänglichen Eingriff (58) für ein Schraubwerkzeug aufweist.

19. Vorrichtung nach einem der Ansprüche 1 bis 18, **dadurch gekennzeichnet, dass** der Spannschaft (12) und der Hohlschaft (14) miteinander fluchtende Durchbrüche (60,62) für den Durchgriff zum Betätigungsmechanismus mittels eines Schraubwerkzeugs aufweisen.

20. Vorrichtung nach einem der Ansprüche 6 bis 19, **dadurch gekennzeichnet, dass** die Druckstücke (48) je einen Mitnehmernocken (54) aufweisen, der gegen eine radial nach außen weisende Anschlagfläche (56) des zugehörigen Spannelements oder Spannelementpaares (24,24') anliegt und dieses beim Betätigen in Richtung Lösestellung mitnimmt.

21. Vorrichtung nach einem der Ansprüche 1 bis 20, **dadurch gekennzeichnet, dass** der Spanneinsatz (32) mit seinen spannschaftseitigen Spannschultem (38) bajonettartig mit dem Spannschaft (12) verriegelbar und in der Verriegelungsstellung formschlüssig gegen Verdrehen sicherbar ist.

22. Vorrichtung nach einem der Ansprüche 1 bis 21, **dadurch gekennzeichnet, dass** die spannschaftseitigen Spannflächen (42) und die zugehörigen Spannschultern (38) der Spannelemente (25) im wesentlichen in einer Radialebene ausgerichtet sind.

23. Vorrichtung nach einem der Ansprüche 1 bis 22, **dadurch gekennzeichnet, dass** die hohlschaftseitigen Spannflächen (44) und die zugehörigen Spannschultem (40) der Spannelemente (25) als gegenüber den spannschaftseitigen Spannflächen (42) und Spannschultem (38) radial nach außen divergierende Schräg- oder Konusflächen ausgebildet sind.

24. Vorrichtung nach einem der Ansprüche 1 bis 23, **dadurch gekennzeichnet, dass** die hohlschaftseitigen Spannschultern (40) der Spannelemente (25) in Umfangsrichtung durch im wesentlichen radial ausgerichtete Begrenzungskanten (39) begrenzt sind.

25. Vorrichtung nach einem der Ansprüche 1 bis 24, **dadurch gekennzeichnet, dass** die hohlschaftseitigen Spannschultem (40) der Spannelemente (25) in radialer Richtung durch eine im wesentlichen in Umfangsrichtung ausgerichtete Begrenzungskante (41) begrenzt sind.

26. Vorrichtung nach Anspruch 24 oder 25, **dadurch gekennzeichnet, dass** zumindest eine der Begrenzungskanten (39,41) konvex gerundet oder angefast ist.

27. Vorrichtung nach einem der Ansprüche 1 bis 26, **gekennzeichnet durch** ein spannschaftseitiges Zentrierelement (68), das eine achszentrale Tasche (88) zur axial und radial schwimmenden Aufnahme der das Kippgelenk bildenden, über den Spanneinsatz (32) axial überstehenden spannschaftseitigen Enden (134) der Spannelemente (25) aufweist.

28. Vorrichtung nach einem der Ansprüche 21 bis 27, **dadurch gekennzeichnet, dass** der Spanneinsatz (32) in seiner Verriegelungsstellung mittels eines die Spannfläche (42) des Spannschafts (12) achsparallel durchdringenden, in eine radial randoffene Ausnehmung eines der Spannelemente oder Spannelementpaare formschlüssig eingreifenden Arretierungsbolzens (110) verdrehgesichert ist.

29. Vorrichtung nach einem der Ansprüche 21 bis 28, **dadurch gekennzeichnet, dass** der Spanneinsatz (32) wahlweise um 180° verdreht in den Spannschaft (12) einsetzbar und dort verriegelbar ist.

30. Vorrichtung nach einem der Ansprüche 1 bis 29, **gekennzeichnet durch** ein spannschaftseitiges Zentrierelement (68), das eine achszentrale Tasche (88) zur axial und radial schwimmenden Aufnahme der das Kippgelenk (140) bildenden, über den Spanneinsatz (32) axial überstehenden spannschaftseitigen Enden (134) der Spannelemente (25) aufweist.

31. Vorrichtung nach Anspruch 30, **dadurch gekennzeichnet, dass** die axial überstehenden spannschaftseitigen Enden (134) der Spannelemente (25) sich in Spannstellung zu einer konischen, zum Spannschaft (12) verjüngenden und in der Lösestellung zu einer zylindrischen Außenfläche ergänzen.

32. Vorrichtung nach einem der Ansprüche 1 bis 31, **dadurch gekennzeichnet, dass** der Hohlschaft (14) eine sich zu seinem freien Ende kegelförmig verjüngende Außenfläche (20) und der Spannschaft (12) eine entsprechend konische Aufnahme (18) aufweist.

33. Vorrichtung nach einem der Ansprüche 1 bis 32, **dadurch gekennzeichnet, dass** der Hohlschaft von einer als Ringschulter ausgebildeten Planfläche (28) begrenzt ist, die in der Spannstellung der Spannelemente (25) gegen eine ringförmige Planfläche (30) des Spannschafts (12) anpreßbar ist.

34. Vorrichtung nach einem der Ansprüche 1 bis 33, **dadurch gekennzeichnet, dass** der als Hohlschaft ausgebildete Werkzeugschaft (14) an seinem freien Ende mindestens eine Nut für den Eingriff eines spannschaftseitigen Mitnehmers (154) aufweist und dass der Spannschaft (12) mindestens eine seitlich gegen eine Axialebene (156) versetzte Bohrung (158) zur Aufnahme eines in die Nut oder in eine Ausnehmung des Hohlschafts eingreifenden, und dabei eine gezielte Spielfreisetzung vorzugsweise in Umfangsrichtung bewirkenden biegeelastisch ausgebildeten Biegebolzens (160) aufweist.

35. Vorrichtung nach Anspruch 34, **dadurch gekennzeichnet, dass** die Bohrung (158) als Gewindebohrung zur Aufnahme des ein entsprechendes Gewinde aufweisenden Biegebolzens (160) ausgebildet ist.

36. Vorrichtung nach Anspruch 35, **dadurch gekennzeichnet, dass** der Biegebolzen (160) einen Gewindeabschnitt (162), einen Biegeabschnitt (164) und einen am freien Ende des Biegeabschnitts hammerartig verdickten Mitnehmerabschnitt (166) aufweist.

37. Vorrichtung nach einem der Ansprüche 34 bis 36, **dadurch gekennzeichnet, dass** zwei zur Axialebene (156) spiegelsymmetrisch angeordnete Bohrungen (158) zur wahlweisen Aufnahme eines Biegebolzens (160) vorgesehen sind.

38. Vorrichtung nach einem der Ansprüche 6 bis 37, **dadurch gekennzeichnet, dass** die Druckstücke (48) an ihren einander zugewandten Seiten einen Spalt begrenzen, in den ein auf der Hohlschaftseite, vorzugsweise am hohlschaftseitigen Zentrierelement (70) überstehender, unter der Einwirkung der Druckstücke (48) mit einer axialen Kraft beaufschlagbarer Auswurfkeil (89) eingreift.

39. Vorrichtung nach Anspruch 38, **dadurch gekennzeichnet, dass** die zum Auswurfkeil (89) weisenden Spaltränder (90) der Druckstücke (48) keilförmig angefast sind.

40. Vorrichtung nach einem der Ansprüche 19 bis 39, **gekennzeichnet durch** einen den Spannschaft (12) außenseitig umgreifenden, an seinen beiden Rändern gegenüber dem Spannschaft abdichtbaren Verschlußring (94), der zwischen je einer die Durchbrüche (60) verschließenden und freigebenden Endstellung begrenzt axial gegenüber dem Spannschaft (12) verschiebbar ist.

41. Vorrichtung nach Anspruch 40, **dadurch gekennzeichnet, dass** der Spannschaft (12) im Bereich der Durchbrüche (60) eine ringförmige Eindrehung (96) aufweist, an die sich über je eine Ringstufe zur Stirnseite des Spannschafts (12) hin ein Auflaufbereich (98) größeren Durchmessers und zur Wurzel des Spannschafts hin ein Führungsbereich (100) größeren Durchmessers anschließt, und dass der Verschlußring (94) je einen in der ringförmigen Eindrehung (96) und im Führungsbereich (100) gegen die Außenfläche des Spannschafts (12) anliegenden Dichtring aufweist.

42. Vorrichtung nach Anspruch 41, **dadurch gekennzeichnet, dass** in der Schließstellung des Verschlußrings (94) mindestens einer der Dichtringe (102,104) in eine ringförmige Rastvertiefung des Spannschafts (12) einrastbar ist.

## Claims

1. Device for connecting a tool head having a hollow shank to a clamping shank (12) having a receptacle (18) for the hollow shank (14) and preferably arranged at the end face on a machine spindle (10), comprising at least two claw- or clip-like clamping elements (25) which are at an angular distance from one another, can be inserted with their one end into the receptacle (18) of the clamping shank (12) and extend with their other end into the interior of the hollow shank (14) to be clamped in place and can each be supported with two clamping shoulders (38, 40), arranged at an axial distance from one another and facing one another, on clamping surfaces (42, 44) arranged in the interior of the clamping shank (12) and of the hollow shank (14) and facing away from one another, and comprising an actuating mechanism (26) for adjusting the clamping elements (25) between a release position and a clamping position, wherein two clamping elements or clamping element pairs (24, 24') which are radially opposite one another are designed as separate parts which if need be bear against one another via an intermediate member (136) and can be pivoted towards one another via the actuating mechanism (26), **characterized in that** the clamping elements (25) or clamping element pairs (24, 24'), while forming a clamping insert (32), bear against one another directly or indirectly via the intermediate member (136) at their clamping-shank-side ends (134) and can be pivoted towards one another about a tilting axis (140) formed by the bearing point (138).

2. Device according to Claim 1, **characterized in that** the clamping element pairs (24, 24') have, at their clamping-shank-side ends (134), clamping elements (25) which are connected to one another in one piece in pairs via a bending joint oriented transversely to the tilting axis (140) and can be bent towards one another about their bending axis by means of the actuating mechanism (26).

3. Device according to Claim 1 or 2, **characterized in that** the clamping-shank-side ends (134) of the clamping elements or clamping element pairs (24, 24') are designed to be crowned on the outside and/or inside in the region of the bearing point (138).

4. Device according to one of Claims 1 to 3, **characterized in that** the intermediate member (136) is designed as a roller or ball placed loosely between the clamping-shank-side ends (134).

5. Device according to one of Claims 1 to 4, **characterized in that** the clamping-shank-side ends (134) are held together via a spring, preferably via a spring ring (168) or a spring clip (170).

6. Device according to one of Claims 1 to 5, **characterized in that** the actuating mechanism (26) has two pressure pieces, which can be inserted into a respective recess (46), open at the end face and radially inwards, of the clamping elements or clamping element pairs (24, 24') situated radially opposite one another, and at least one screwing element (50) for adjusting the distance between the pressure pieces (48) .

7. Device according to Claim 6, **characterized in that** the screwing element (50) is designed as a differential screw which engages by means of its thread portions (51) in opposed internal threads (52), in alignment with one another and radially oriented, of the pressure pieces (48).

8. Device according to Claim 6 or 7, **characterized in that** the pressure pieces (48) are connected to one another in one piece via a bending joint (49) preferably designed as a spring loop.

9. Device according to one of Claims 6 to 8, **characterized in that** the screwing element (50) is designed as a stud bolt which passes through an internal thread (52) of one of the pressure pieces (48) and bears with its end face against an abutment (53) of the other pressure piece (48).

10. Device according to Claim 9, **characterized in that** a second stud bolt passes through an internal thread (52) of the other pressure piece (48) and the end face thereof forms the abutment (53) for the first stud bolt.

11. Device according to one of Claims 6 to 10, **characterized in that** the pressure pieces (48) have a crowned or wedge-shaped profile towards the adjacent clamping element pair (24, 24').

12. Device according to Claim 11, **characterized in that** the crowned or wedge-shaped profile of the pressure pieces (48) is divided into a flatter adjustment slope in the adjustment direction and a steeper clamping slope adjoining said flatter adjustment slope.

13. Device according to one of Claims 6 to 10, **characterized in that** the pressure pieces (48) have a pressure surface (172) which is partly cylindrical towards the adjacent clamping element (25) and rolls on the bearing surface (174) of the latter during the clamping operation.

14. Device according to Claim 13, **characterized in that** the clamping elements (25) have a preferably flat bearing surface (174) facing the respective pressure piece (48), and **in that** the pressure surfaces (172) of the pressure pieces (48) have an apex surface (172') which bears flat against the bearing surface (174) in the clamping position of the pressure pieces.

15. Device according to one of Claims 6 to 14, **characterized in that** the internal threads (52) of the pressure pieces (48) and the thread portions (51) of the screwing element (50) have play allowing the tolerance compensation.

16. Device according to one of Claims 1 to 15, **characterized in that** the clamping elements (25) and/or the pressure pieces (48) have a wear-resistant and/or friction-reducing surface coating or are surface-hardened.

17. Device according to one of Claims 1 to 16, **characterized in that** the clamping elements (25) of each clamping element pair (24, 24') are separated from one another by an axial gap (64) which preferably goes right through to the relevant bending joint.

18. Device according to Claim 17, **characterized in that** the screwing element (50) has at least one engagement opening (58), accessible radially through one of the axial gaps (64), for a screwing tool.

19. Device according to one of Claims 1 to 18, **characterized in that** the clamping shank (12) and the hollow shank (14) have apertures (60, 62) in alignment with one another for reaching through to the actuating mechanism by means of a screwing tool.

20. Device according to one of Claims 6 to 19, **characterized in that** the pressure pieces (48) each have a driver lug (54) which bears against a radially outwardly pointing stop surface (56) of the associated clamping element or clamping element pair (24, 24') and drives the latter during actuation in the direction of the release position.

21. Device according to one of Claims 1 to 20, **characterized in that** the clamping insert (32), with its clamping-shank-side clamping shoulders (38), can be locked in a bayonet-like manner with the clamping shank (12) and can be secured against rotation in a positive-locking manner in the locking position.

22. Device according to one of Claims 1 to 21, **characterized in that** the clamping-shank-side clamping surfaces (42) and the associated clamping shoulders (38) of the clamping elements (25) are oriented substantially in a radial plane.

23. Device according to one of Claims 1 to 22, **characterized in that** the hollow-shank-side clamping surfaces (44) and the associated clamping shoulders (40) of the clamping elements (25) are designed as sloping or conical surfaces which diverge radially outwards relative to the clamping-shank-side clamping surfaces (42) and clamping shoulders (38).

24. Device according to one of Claims 1 to 23, **characterized in that** the hollow-shank-side clamping shoulders (40) of the clamping elements (25) are defined in the circumferential direction by substantially radially oriented boundary edges (39).

25. Device according to one of Claims 1 to 24, **characterized in that** the hollow-shank-side clamping shoulders (40) of the clamping elements (25) are defined in the radial direction by a boundary edge (41) oriented substantially in the circumferential direction.

26. Device according to Claim 24 or 25, **characterized in that** at least one of the boundary edges (39, 41) is convexly rounded or bevelled.

27. Device according to one of Claims 1 to 26, **characterized by** a clamping-shank-side centring element (68) which has an axially central pocket (88) for accommodating the clamping-shank-side ends (134) of the clamping elements (25) in an axially and radially floating manner, said ends (134) forming the tilting joint and projecting axially beyond the clamping insert (32).

28. Device according to one of Claims 21 to 27, **characterized in that** the clamping insert (32) is locked against rotation in its locking position by means of a locking pin (110) which passes through the clamping surface (42) of the clamping shank (12) in an axially parallel manner and engages in a positive-locking manner in a recess, open radially at the margin, of one of the clamping elements or clamping element pairs.

29. Device according to one of Claims 21 to 28, **characterized in that** the clamping insert (32) can be optionally inserted into the clamping shank (12) in a position rotated through 180° and can be locked there.

30. Device according to one of Claims 1 to 29, **characterized by** a clamping-shank-side centring element (68) which has an axially central pocket (88) for accommodating the clamping-shank-side ends (134) of the clamping elements (25) in an axially and radially floating manner, said ends (134) forming the tilting joint (140) and projecting axially beyond the clamping insert (32).

31. Device according to Claim 30, **characterized in that** the axially projecting clamping-shank-side ends (134) of the clamping elements (25) complement one another to form a conical outer surface, tapering towards the clamping shank (12), in the clamping position and a cylindrical outer surface in the release position.

32. Device according to one of Claims 1 to 31, **characterized in that** the hollow shank (14) has an outer surface (20) tapering conically towards its free end and the clamping shank (12) has a correspondingly conical receptacle (18).

33. Device according to one of Claims 1 to 32, **characterized in that** the hollow shank is defined by a flat face (28) which is designed as an annular shoulder and can be pressed against an annular flat face (30) of the clamping shank (12) in the clamping position of the clamping elements (25).

34. Device according to one of Claims 1 to 33, **characterized in that** the tool shank (14) designed as a hollow shank has, at its free end, at least one groove for the engagement of a clamping-shank-side driver (154), and **in that** the clamping shank (12) has at least one hole (158), offset laterally from an axial plane (156), for accommodating a flexurally elastic bending bolt (160) which engages in the groove or in a recess of the hollow shank and in the process specifically removes play preferably in the circumferential direction.

35. Device according to Claim 34, **characterized in that** the hole (158) is designed as a tapped hole for accommodating the bending bolt (160) having a corresponding thread.

36. Device according to Claim 35, **characterized in that** the bending bolt (160) has a threaded section (162), a bending section (164) and a driver section (166) widened in a hammer-like manner at the free end of the bending section.

37. Device according to one of Claims 34 to 36, **characterized in that** two holes (158) arranged in mirror symmetry relative to the axial plane (156) are provided for optionally accommodating a bending bolt (160).

38. Device according to one of Claims 6 to 37, **characterized in that** the pressure pieces (48) define a gap on their sides facing one another, in which gap an ejector wedge (89) engages, which ejector wedge (89) projects on the hollow-shank side, preferably on the hollow-shank-side centring element (70), and can be acted upon by an axial force under the effect of the pressure pieces (48).

39. Device according to Claim 38, **characterized in that** the gap margins (90), pointing towards the ejector wedge (89), of the pressure pieces (48) are bevelled in a wedge shape.

40. Device according to one of Claims 19 to 39, **characterized by** a closure ring (94) which encloses the clamping shank (12) on the outside, can be sealed at its two margins relative to the clamping shank and can be displaced axially relative to the clamping shank (12) to a limited extent in each case between an end position closing and an end position clearing the apertures (60).

41. Device according to Claim 40, **characterized in that** the clamping shank (12) has an annular turned recess (96) in the region of the apertures (60), and a run-up region (98) of larger diameter adjoins said turned recess (96) towards the end face of the clamping shank (12) and a guide region (100) of larger diameter adjoins said turned recess (96) towards the root of the clamping shank, in each case via an annular step, and **in that** the closure ring (94) has a respective sealing ring bearing in the annular turned recess (96) and in the guide region (100) against the outer surface of the clamping shank (12).

42. Device according to Claim 41, **characterized in that** at least one of the sealing rings (102, 104) can be snapped into an annular catch recess of the clamping shank (12) in the closed position of the closure ring (94).

## Revendications

1. Dispositif conçu pour relier une tête d'outil, munie d'une tige creuse, à une tige de serrage (12) placée, de préférence, à la face avant d'une broche (10) de machine et dotée d'un logement (18) dédié à ladite tige creuse (14), comprenant au moins deux éléments de serrage (25) du type griffes ou mors qui se trouvent à une distance angulaire l'un de l'autre, peuvent être insérés dans ledit logement (18) de la tige de serrage (12) par l'une de leurs extrémités, s'engagent, par leur autre extrémité, dans l'espace interne de la tige creuse (14) devant être enserrée et peuvent prendre appui, par deux épaulements respectifs de serrage (38, 40) situés à distance axiale l'un de l'autre et tournés l'un vers l'autre, contre des surfaces de serrage (42, 44) pointant à l'opposé l'une de l'autre et disposées dans l'espace interne de ladite tige de serrage (12) et de ladite tige creuse (14) ; et un mécanisme de commande (26) affecté au réglage desdits éléments de serrage (25) entre une position de libération et une position de serrage, sachant que deux éléments de serrage ou paires (24, 24') d'éléments de serrage, en vis-à-vis réciproque dans le sens radial, sont réalisé(e)s sous la forme de parties distinctes qui sont, le cas échéant, mutuellement en applique au moyen d'un élément intermédiaire (136) et auxquelles ledit mécanisme de commande (26) peut imprimer des pivotements réciproques, **caractérisé par le fait que** lesdits éléments de serrage (25), ou lesdites paires (24, 24') d'éléments de serrage, sont en applique mutuelle par leurs extrémités (134) situées côté tige de serrage, directement ou indirectement au moyen dudit élément intermédiaire (136), en formant un insert de serrage (32) ; et peuvent être animé(e)s de pivotements réciproques autour d'un axe de basculement (140) matérialisé par le point d'appui (138).

2. Dispositif selon la revendication 1, **caractérisé par le fait que** les paires (24, 24') d'éléments de serrage comportent, à leurs extrémités (134) situées côté tige de serrage, des éléments de serrage (25) qui sont reliés entre eux d'un seul tenant, par paires, au moyen d'une articulation de flexion orientée transversalement par rapport à l'axe de basculement (140), et peuvent ployer réciproquement autour de leur axe de flexion, à l'aide du mécanisme de commande (26).

3. Dispositif selon la revendication 1 ou 2, **caractérisé par le fait que** les extrémités (134) des éléments de serrage ou des paires (24, 24') d'éléments de serrage, situées côté tige de serrage, sont de réalisation extérieurement et/ou intérieurement bombée dans la région du point d'appui (138).

4. Dispositif selon l'une des revendications 1 à 3, **caractérisé par le fait que** l'élément intermédiaire (136) est réalisé sous la forme d'une roulette ou d'une bille interposée, avec jeu, entre les extrémités (134) situées côté tige de serrage.

5. Dispositif selon l'une des revendications 1 à 4, **caractérisé par le fait que** la cohésion mutuelle des extrémités (134) situées côté tige de serrage est assurée au moyen d'un ressort, de préférence au moyen d'une bague (168) à ressort ou d'une bride (170) à ressort.

6. Dispositif selon l'une des revendications 1 à 5, **caractérisé par le fait que** le mécanisme de commande (26) comprend deux pièces de pression pouvant être insérées dans un évidement respectif (46), ouvert à la face avant et vers l'intérieur dans le sens radial, des éléments de serrage ou des paires (24, 24') d'éléments de serrage se faisant mutuellement face dans le sens radial ; ainsi qu'au moins un élément à vis (50) destiné à régler la distance entre lesdites pièces de pression (48).

7. Dispositif selon la revendication 6, **caractérisé par le fait que** l'élément à vis (50) est réalisé sous la forme d'une vis différentielle s'engageant, par ses parties filetées (51), dans des filetages intérieurs (52) des pièces de pression (48) alignés entre eux, orientés dans le sens radial et pourvus de pas opposés.

8. Dispositif selon la revendication 6 ou 7, **caractérisé par le fait que** les pièces de pression (48) sont reliées entre elles d'un seul tenant par l'intermédiaire d'une articulation de flexion (49) réalisée, de préférence, sous la forme d'une boucle de ressort.

9. Dispositif selon l'une des revendications 6 à 8, **caractérisé par le fait que** l'élément à vis (50) est réalisé sous la forme d'un axe fileté passant dans un filetage intérieur (52) de l'une des pièces de pression (48) et appliqué, par sa surface frontale, contre une butée (53) de l'autre pièce de pression (48).

10. Dispositif selon la revendication 9, **caractérisé par le fait qu'**un second axe fileté, dont la surface frontale forme la butée (53) dévolue au premier axe fileté, passe dans un filetage intérieur (52) de l'autre pièce de pression (48).

11. Dispositif selon l'une des revendications 6 à 10, **caractérisé par le fait que** les pièces de pression (48) offrent un profil bombé, ou en forme de clavette, en direction de la paire voisine (24, 24') d'éléments de serrage.

12. Dispositif selon la revendication 11, **caractérisé par le fait que** le profil des pièces de pression (48), bombé ou en forme de clavette, est scindé en un chanfrein d'avance plus aplati dans la direction d'avance et, dans la succession directe de ce dernier, en un chanfrein de serrage à biseau plus accentué.

13. Dispositif selon l'une des revendications 6 à 10, **caractérisé par le fait que** les pièces de pression (48) présentent une surface de pression (172) partiellement cylindrique en direction de l'élément de serrage (25) voisin, et roulant sur la surface d'appui (174) de celui-ci au cours de l'opération de serrage.

14. Dispositif selon la revendication 13, **caractérisé par le fait que** les éléments de serrage (25) présentent une surface d'appui (174) de préférence plane, tournée vers la pièce de pression (48) considérée ; et **par le fait que** les surfaces de pression (172) des pièces de pression (48) comportent une surface supérieure (172') portant à plat, contre ladite surface d'appui (174), dans la position de serrage desdites pièces de pression.

15. Dispositif selon l'une des revendications 6 à 14, **caractérisé par le fait que** les filetages intérieurs (52) des pièces de pression (48), et les parties filetées (51) de l'élément à vis (50), présentent un jeu qui autorise la compensation de tolérances.

16. Dispositif selon l'une des revendications 1 à 15, **caractérisé par le fait que** les éléments de serrage (25), et/ou les pièces de pression (48), portent un revêtement de surface résistant à l'usure et/ou diminuant le frottement ; ou sont trempé(e)s en surface.

17. Dispositif selon l'une des revendications 1 à 16, **caractérisé par le fait que** les éléments de serrage (25) de chacune des paires (24, 24') d'éléments de serrage sont séparés les uns des autres par une fente axiale (64) s'étendant, de préférence, sans discontinuité jusqu'à l'articulation de flexion considérée.

18. Dispositif selon la revendication 17, **caractérisé par le fait que** l'élément à vis (50) possède au moins un engrènement (58) destiné à un outil de vissage et accessible, dans le sens radial, à travers l'une des fentes axiales (64).

19. Dispositif selon l'une des revendications 1 à 18, **caractérisé par le fait que** la tige de serrage (12) et la tige creuse (14) offrent des passages (60, 62) coïncidant entre eux, en vue d'accéder au mécanisme de commande au moyen d'un outil de vissage.

20. Dispositif selon l'une des revendications 6 à 19, **caractérisé par le fait que** les pièces de pression (48) sont dotées d'une came respective d'entraînement (54) qui est en applique contre une surface de butée (56), pointant radialement vers l'extérieur, de l'élément de serrage ou de la paire (24, 24') d'éléments de serrage associé(e) ; et qui entraîne celui (celle)-ci, lors de l'actionnement, dans le sens de la position de libération.

21. Dispositif selon l'une des revendications 1 à 20, **caractérisé par le fait que** l'insert de serrage (32) peut être verrouillé avec la tige de serrage (12) à la manière d'une baïonnette, par ses épaulements de serrage (38) situés du côté de ladite tige de serrage ; et peut être bloqué contre la torsion, dans la position de verrouillage, par conjugaison de formes.

22. Dispositif selon l'une des revendications 1 à 21, **caractérisé par le fait que** les surfaces de serrage (42) situées côté tige de serrage, et les épaulements de serrage (38) associés des éléments de serrage (25), sont sensiblement orientés dans un plan radial.

23. Dispositif selon l'une des revendications 1 à 22, **caractérisé par le fait que** les surfaces de serrage (44) situées côté tige creuse, et les épaulements de serrage (40) associés des éléments de serrage (25), sont réalisés sous la forme de surfaces inclinées ou de surfaces coniques qui divergent radialement, vers l'extérieur, vis-à-vis des surfaces de serrage (42) et des épaulements de serrage (38) situés côté tige de serrage.

24. Dispositif selon l'une des revendications 1 à 23, **caractérisé par le fait que** les épaulements de serrage (40) des éléments de serrage (25) qui sont situés côté tige creuse sont délimités, dans le sens périphérique, par des arêtes de délimitation (39) orientées sensiblement dans le sens radial.

25. Dispositif selon l'une des revendications 1 à 24, **caractérisé par le fait que** les épaulements de serrage (40) des éléments de serrage (25) qui sont situés côté tige creuse sont délimités, dans le sens radial, par une arête de délimitation (41) orientée sensiblement dans le sens périphérique.

26. Dispositif selon la revendication 24 ou 25, **caractérisé par le fait qu'**au moins l'une des arêtes de délimitation (39, 41) présente une courbure convexe ou un chanfrein.

27. Dispositif selon l'une des revendications 1 à 26, **caractérisé par** un élément de centrage (68) situé côté tige de serrage, muni d'une poche (88) centrée par rapport à l'axe en vue de recevoir, de manière axialement et radialement flottante, les extrémités (134) des éléments de serrage (25) qui sont situées côté tige de serrage, matérialisent l'articulation basculante et font axialement saillie au-delà de l'insert de serrage (32).

28. Dispositif selon l'une des revendications 21 à 27, **caractérisé par le fait que** l'insert de serrage (32) est bloqué contre la torsion, dans sa position de verrouillage, au moyen d'un boulon de blocage (110) qui traverse la surface de serrage (42) de la tige de serrage (12), parallèlement à l'axe, et s'engage par conjugaison de formes dans un évidement, radialement ouvert sur le bord, de l'un des éléments de serrage ou de l'une des paires d'éléments de serrage.

29. Dispositif selon l'une des revendications 21 à 28, **caractérisé par le fait que** l'insert de serrage (32) peut être sélectivement introduit dans la tige de serrage (12) avec rotation de 180°, et être verrouillé dans ladite tige.

30. Dispositif selon l'une des revendications 1 à 29, **caractérisé par** un élément de centrage (68) situé côté tige de serrage, muni d'une poche (88) centrée par rapport à l'axe en vue de recevoir, de manière axialement et radialement flottante, les extrémités (134) des éléments de serrage (25) qui sont situées côté tige de serrage, matérialisent l'articulation basculante (140) et font axialement saillie au-delà de l'insert de serrage (32).

31. Dispositif selon la revendication 30, **caractérisé par le fait que** les extrémités (134) des éléments de serrage (25), situées côté tige de serrage et placées axialement en saillie, se complètent pour former une surface extérieure conique se rétrécissant vers ladite tige de serrage (12), en position de serrage; et une surface extérieure cylindrique dans la position de libération.

32. Dispositif selon l'une des revendications 1 à 31, **caractérisé par le fait que** la tige creuse (14) présente une surface extérieure (20) se rétrécissant en forme de cône, vers son extrémité libre, et la tige de serrage (12) comporte un logement (18) de forme conique correspondante.

33. Dispositif selon l'une des revendications 1 à 32, **caractérisé par le fait que** la tige creuse est délimitée par une surface plane (28) réalisée sous la forme d'un épaulement annulaire et pouvant être pressée, dans la position de serrage des éléments de serrage (25), contre une surface plane annulaire (30) de la tige de serrage (12).

34. Dispositif selon l'une des revendications 1 à 33, **caractérisé par le fait que** la tige (14) d'outil réalisée sous la forme d'une tige creuse présente, à son extrémité libre, au moins une rainure conçue pour la venue en prise d'un entraîneur (154) situé côté tige de serrage ; et **par le fait que** ladite tige de serrage (12) comporte au moins un alésage (158) latéralement décalé vis-à-vis d'un plan axial (156) en vue de recevoir un boulon de flexion (160) doué de flexibilité élastique, qui pénètre dans la rainure ou dans un évidement de ladite tige creuse en provoquant alors, de préférence dans le sens périphérique, une libération de jeu ciblée.

35. Dispositif selon la revendication 34, **caractérisé par le fait que** l'alésage (158) se présente comme un trou taraudé, conçu pour recevoir le boulon de flexion (160) muni d'un filetage correspondant.

36. Dispositif selon la revendication 35, **caractérisé par le fait que** le boulon de flexion (160) comprend une partie filetée (162), une partie de flexion (164) et une partie d'entraînement (166) épaissie, à la façon d'un marteau, à l'extrémité libre de ladite partie de flexion.

37. Dispositif selon l'une des revendications 34 à 36, **caractérisé par** la présence de deux alésages (158) agencés de manière spéculaire par rapport au plan axial (156), en vue de recevoir sélectivement un boulon de flexion (160).

38. Dispositif selon l'une des revendications 6 à 37, **caractérisé par le fait que** les pièces de pression (48) délimitent, sur leurs côtés se faisant mutuellement face, une fente dans laquelle s'engage une clavette d'éjection (89) qui fait saillie du côté de la tige creuse, de préférence sur l'élément de centrage (70) situé côté tige creuse, et peut être sollicitée par une force axiale sous l'action desdites pièces de pression (48).

39. Dispositif selon la revendication 38, **caractérisé par le fait que** les bords de séparation (90) des pièces de pression (48), dirigés vers la clavette d'éjection (89), sont chanfreinés en forme de clavette.

40. Dispositif selon l'une des revendications 19 à 39, **caractérisé par** une bague de fermeture (94) qui ceinture extérieurement la tige de serrage (12), peut être rendue étanche sur ses deux bords vis-à-vis de ladite tige de serrage et peut accomplir des coulissements axiaux limités, par rapport à ladite tige de serrage (12), entre des positions extrêmes provoquant, respectivement, une fermeture et une libération des passages (60).

41. Dispositif selon la revendication 40, **caractérisé par le fait que** la tige de serrage (12) offre, dans la région des passages (60), une gorge annulaire (96) venue de tournage à laquelle se rattachent, par l'intermédiaire d'un gradin annulaire respectif, une zone d'entrée (98) de diamètre supérieur en direction de la face frontale de ladite tige de serrage (12), et une zone de guidage (100) de diamètre supérieur en direction de la racine de ladite tige de serrage ; et **par le fait que** la bague de fermeture (94) présente une bague respective d'étanchéité en applique, dans ladite gorge annulaire (96) venue de tournage et dans ladite zone de guidage (100), contre la surface extérieure de ladite tige de serrage (12).

42. Dispositif selon la revendication 41, **caractérisé par le fait que**, dans la position de fermeture de la bague de fermeture (94), au moins l'une des bagues d'étanchéité (102, 104) peut être enclenchée dans une cavité annulaire d'arrêt de la tige de serrage (12).
